# EUROPEAN PATENT APPLICATION

(11) **EP 4 398 029 A1**
(43) Date of publication of application: **10.07.2024**
(21) Application number: 23305015.2
(22) Date of filing: 05.01.2023
(51) Int. Cl.: G02F 1/137, C09K 19/58, E06B 3/67, E06B 9/24

(54) **LIQUID CRYSTALS SWITCHABLE STACK, LIQUID CRYSTALS MIXTURE, AND SYSTEM WITH LIQUID CRYSTALS SWITCHABLE STACK**

(71) Applicant: Saint-Gobain Glass France, 92400 Courbevoie (FR); Brilliant Optronics Co., Ltd, Kaohsiung City 81349 (TW)
(72) Inventor: LI, Cheng-Chang, Kaohsiung 81349 (TW); CHANG, Li-Min, Kaohsiung 81349 (TW); LIN, Kuan-Wu, Kaohsiung 81349 (TW); GUO, Duan-Yi, Kaohsiung 81349 (TW); LIN, Tsung-Hsien, Kaohsiung 81349 (TW); FOUQUES, Axel, 93300 Aubervilliers (FR)
(74) Representative: Saint-Gobain Recherche

(57) **Abstract**

The invention proposes optimized DSM switchable stack provide optimized LC, ion type and ion concentration, and even improves the driving voltage, response time and power consumption.

## Description

The present invention relates to technologies for optoelectronic component and, more particularly, to a liquid crystals switchable stack.

Conventional switchable devices based on liquid crystals molecules can be switched through electricity between transparent clear state to scattering state, the liquid crystals changing orientation and modify the diffuse light transmission while keeping total light transmission constant.

It exists various switchable liquid crystals devices, ones using drops of liquid crystals dispersed in polymer, such as PDLC (for Polymer Dispersed Liquid Cristal), or others including nematic layer with ions using dynamic scattering mode (DSM), based on electrohydrodynamic effect induced by the dynamic balance between the rotation of the LC and the diffusion of the ions. The DSM stack has these advantages (unlike PDLC):
- transparent clear state (very low Haze level) without voltage and even very low Haze even in large viewing angle, liquid crystals being perpendicular to substrates (the first alignment layers when homeotropic forcing the liquid crystals to align vertically in off state)
- scattering state (very hazy) with voltage, ions movement creating convection cells tending to orientate randomly liquid crystals
- reasonable driving frequency and driving voltage.

However, DSM stacks are governed by numerous important factors that conflict with each other such as power consumption, response time and the optical performances. Hence, how to choose the LC electroactive material layer for optimizing these properties is a big challenge.

It is an objective of the present invention to provide an improved DSM switchable stack. To the end, the present invention proposes a switchable stack (based on dynamic scattering mode), comprising first and second transparent dielectric substrates (polymeric or glass, notably flexible, thin like ultrathin glass or UTG) respectively having first and second transparent electrode layer (notably metal based or transparent conductive oxyde "TCO" such as ITO) and first and second alignment layers (preferably both homeotropic or even both homogeneous) respectively over the first and second electrode layer, and, located between (and in contact with) the first and second alignment layers, an electroactive layer of a electroactive material comprising (or even consist essentially) nematic liquid crystals, called nematic LC, (one type or several nematics, preferably untwisted and or without chiral dopant, notably rods) with dielectric anisotropy Δε and salt ions , in peculiar the liquid crystal based layer extending over a length of at least 5cm and a width of at least 1cm (notably a surface of at least 5, 10 ,25 or 100cm²), in peculiar liquid crystal based layer having a given thickness preferably from 2 or 3 to 30 or 40µm, or even 8 or 12 to 20µm), in peculiar spacers being dispersed within said material).

The switchable glass is in a transparent (clear) state without applied voltage, notably having a given minimum haze Hmin, lower or equal to 5% preferably and even 2% or 1%.

When an alternating voltage (preferably having root mean square Ur1 not more than 50V and better not more than 25V or 24V, with a given frequency f1) is applied to the switchable stack, the switchable stack being in a scattering state defined by a second haze H1 of at least 80%,
- said nematic LC having negative dielectric anisotropy , Δε lower than -3,
- said nematic LC being at least 80% and better 90%, 95%, 99%, 99.0, 99.5%, 99.6%, 99.7% 99.8% in weight of the sum of the weights of nematic LC and ions or even in weight of said electroactive material,
- said ions concentration being larger than 0.005% or even 0.01 or 0.02% and lower than 1%, or even than 0.5% or than 0.3% in weight of the sum of the weights of nematic LC and ions or even in weight of said electroactive material.

The electroactive material does not comprise polymer or even oligomer or monomer or a rate of polymer or even oligomer or monomer lower than 15%, 10%, 5%, 1%, 0,5% in weight.

The intrinsic properties of the LC and the compatibility of LC and ions are very important to the electro-optical properties as also ion concentration. The dielectric anisotropy of the LC need to be negative value and with a upper limit value.

Said nematic LC can have also birefringence from 0.05 to 0.3 preferably 0.08 to 0.2.

Larger birefringence of the LC has better haze in scattering state. Although even the bigger birefringence is theoretically better. It is hard to find birefringence larger than 0.3. This invention clearly defined specific features of host LC, and preferred ion ranges, and its compatibility. In said optimized composition, the optical performance, and even driving voltage, and switching times (on/ off or off/ on) , and power consumption are improved and ion accumulation is limited or even avoided.

With ion concentration larger than 1% the risks of ion aggregation tends be severe for all materials.

The electroactive material can comprise one or other additives (inert compounds etc) which have no impact on rising (or decay) time and/or haze. For example, additive to enhance solubility of ions (prevent precipitation of ions such ion agglomeration). The electroactive material is preferably devoid of ion precipitation thereby we can choose ion concentration to be under solubility limit. Ion concentration could be lower than 1% in weight of electroactive material and/or liquid crystals of at least even 90%, 95%, 96% 97% 98%, 99% in weight of electroactive material.

Preferably the nematic phase is at least in the range 10-40°C, or 0-50°C, and even -40C to 100°C.

The supplier of liquid crystals (with selected negative dielectric anisotropy) are Merck KGaA, DIC Corporation, HECHENG Display, Slichem, Daily-polymer Corporation.

The electroactive material can comprise low rate (notably lower than 15% or than 10% or than 5% or than 1% by weight of said material) or none of polymer or oligomer or monomer.

The electroactive material can consist on said nematic LC and ions only (with possible classical impurities) and con consist of said nematic LC and ion and less than 1% or than 0.5% of inert compounds (having no effect on electropoptics properties).

Preferably, for a high level of H1, liquid crystals are nematic rod, untwisted, without chiral dopant or twisted nematic liquid crystals.

Preferably ions concentrations is larger than 0.01% in weight of said electroactive material for inducing correctly the DSM notably to have a sufficient level of Haze H1 eg at least 80%.

Advantageously ,Δε is lower than -3,5 and even from -7 to -4.

Regarding the Δε, the experimental results shows that when the Δε>-4 (for example - 3.9), the driving voltage is really increasing and well for -15.

Because the dynamic scattering is the dynamic balance between the rotation of the LC and the diffusion of the ions. Therefore, too small dielectric anisotropy (smaller than -7) will increase the torque of the liquid crystal rotation, resulting in the need for larger voltages to generate disturbances. However, too large dielectric anisotropy (larger than -4) will make the liquid crystal unable to be rotated, resulting in the need for a larger voltage to balance the perturbation produced by the ions.

The dielectric anisotropy can be measured by LC capacitance measurement or dielectric spectroscopy measurement.

Preferably, the electroactive material comprises at least 95% or 96% or 97% or 98% or 99% or even 99.5%, 99.9% by weight of the mixture of said nematic LC and said ions. We prefer low rate or no chiral dopant or twited nematic to have better haze in operation stage.

Nematic LC is chemically compatible to ions.

If the ions are not soluble, the ion aggregation can be observed by polarized optical microscopy (POM) image in particular on an image of size 300 µm per 300µm.

Depending on the nature of the liquid crystal used, notably its viscosity, the amount of energy needed to efficiently mix the medium and create a satisfying haze value may vary. The more viscous the liquid crystal, the more input energy is needed to mix the medium and create haze. This is due to a viscous friction dissipation phenomenon increasing with viscosity that is slowing down ion movement. The energy injected into the system is partly used for thermal dissipation through viscous friction, and a lesser amount of energy is efficiently maintaining ion movement and creating haze. If that hypothesis is correct, using a higher amplitude of electric field along with a higher viscosity LC should bring similar performances than the usual amplitude of electric field with a LC of lower viscosity.

Overall, a low viscosity value is preferred because it lowers the overall energy consumption of the device. Therefore, the electroactive material can exhibit a rotational viscosity greater than or equal to 0.01 Pa.s (Pascal-second), and preferably greater than or equal to 0.01 Pa.s and less than or equal to 2 Pa.s and best range being from 0.02 Pa.s to 0,3 Pa.s, The measurement is for example made by viscositymeter

In preferred embodiments, we select ions type, notably salt ions. Among salt ions there are notably zwitterion, halides ions, sulfate ions, metal ions.

In a switchable stack according to the invention, the liquid crystal based layer contains salt ions. According to the present invention, "salt ions" means chemical compounds comprising a negative and a positive charge with no net electric charge.

Said salt ions may be zwitterions.

Alternatively, said salt ions may be salts of the formula (I)

A⁺(R)ₙ X⁻ (I)

wherein
A is chosen from N, P and S;
when A is S, n is 3;
when A is N or P, n is 4;
R are identical or different and selected from a hydrogen atom or branched or linear hydrocarbon chains, optionally comprising heteroatoms;
X- is chosen from an entity comprising at least one halogen atom, HSO₄⁻, H₂PO₄⁻, NO₃⁻, NO₂⁻, HCO₃⁻.

When A is N, said salts are ammonium salts, in particular when R are different from hydrogen atoms, said salts are quaternary ammonium salts. When A is P, said salts are phosphonium salts, and when A is S, said salts are sulfonium salts.

In particular, in the formula (I), A is N. Accordingly, the salt ions implemented in the invention are preferably ammonium salts. Indeed, an ion comprising N as A is more likely to be inert towards the nematic liquid crystals and the alignment layers than similar ions comprising S or P.

Said R chains are preferably inert towards the nematic liquid crystals and the alignment layers.

Accordingly, said R chains preferably do not contain any oxygen, even more preferably, said side chains do not contain any heteroatom. Preferably, said R chains do not contain any unsaturation.

In particular, in the formula (I), R are aliphatic chains devoid of oxygen and comprising at least 3 carbon atoms.

In particular, in the formula (I), R are aliphatic chains devoid of heteroatoms and comprising at least 3 carbon atoms.

Without being bound to any theory, the inventors believe that long carbon chains, in particular carbon chains comprising at least 3 carbon atoms allow to distance the species bearing opposite charges (in the formula (I): A and X) by steric repulsion, which may result in an improved anion mobility.

Preferably, in the formula (I), R are identical chains.

Even more preferably, in the formula (I), R are identical C₃-C₁₈ alkyl chains.

The inventors also believe that a centrally located positive charge further improves the beneficial steric repulsion effect between the species bearing opposite charges.

In particular, in the formula (I), X- is chosen from HSO₄⁻ or an entity comprising at least one halogen atom excluding PF₆⁻.

Preferably, in the formula (I), X- is chosen from F-, Cl-, Br, I⁻ and BF₄⁻.

Indeed, as demonstrated by the examples below, similarly than for the cationic part of the salt, a X- that is inert towards the nematic liquid crystals and the alignment layers is preferred.

Even more preferably, in the formula (I), X- is BF₄⁻.

Without being bound to any theory, the inventors believe that BF₄⁻ allows for a more decentralized charge while still being inert towards the nematic liquid crystals and the alignment layers, since any possible interaction coming from the boron is prevented thanks to the high electronegativity of the fluor atoms.

Accordingly, in an embodiment of the invention, the liquid crystal-based layer of the switchable stack comprises salt ions chosen from zwitterions and salts of the formula (I)

A⁺(R)ₙ X⁻ (I)

wherein
A is chosen from N, P and S, in particular A is N;
when A is S, n is 3;
when A is N or P, n is 4
R are identical or different and selected from a hydrogen atom or branched or linear hydrocarbon chains, optionally comprising heteroatoms, notably devoid of oxygen, in particular R are aliphatic chains devoid of heteroatoms and comprising at least 3 carbon atoms, preferably R are identical C₃-C₁₈ alkyl chains;
X- is chosen from an entity comprising at least one halogen atom, HSO₄⁻, H₂PO₄⁻, NO₃⁻, NO₂⁻, HCO₃⁻; in particular X- is chosen from HSO₄⁻ or an entity comprising at least one halogen atom, excluding PF₆⁻, preferably X- is chosen from F-, Cl⁻, Br, I⁻ and BF₄⁻, even more preferably, X is BF₄⁻.

In an embodiment of the invention, X- is an entity comprising at least one halogen atom, in particular excluding PF₆⁻, preferably chosen from F⁻, Cl⁻, Br, I⁻ and BF₄⁻, even more preferably, X- is BF₄⁻.

In this embodiment, the salt ions are organic halide salts, such as ammonium halide salts, sulfonium halide salts, phosphonium halide salts, or a combination thereof. In said salts, the halide part is represented by X⁻ in the formula (I).

Sulfonium halide salts may be represented by the formula (III)

S⁺(R)₃ X⁻ (III)

wherein R and X⁻ are as defined in the present text.

Amongst the sulfonium halide salts suitable for the present invention, may be cited tributylsulfonium halides, dimethyl(octyl)sulfonium halides, (ethoxycarbonylmethyl)dimethylsulfonium halides, dimethyl(2-phenylethyl)sulfonium halides, benzyl(diethyl)sulfonium halide, dimethyl[1-(4-methylphenyl)ethyl]sulfonium halides, [1-(dimethylamino)-4-pentenylidene]-2-propenylsulfonium halides, [1-(dimethylamino)-3-methyl-4-pentenylidene]-2-propenylsulfonium halide, or a combination thereof. Preferably, sulfonium halide salts suitable for the invention are tributylsulfonium halides.

Phosphonium halide salts may be represented by the formula (IV)

P⁺(R)₄ X⁻ (IV)

wherein R and X⁻ are as defined in the present text.

Amongst the phosphonium halide salts suitable for the present invention, may be cited tetrabutylphosphonium halides, tetraoctylphosphonium halides, tetraphenylphosphonium halides, tributylmethylphosphonium halides, methyltriphenylphosphonium halides, isopropyltriphenylphosphonium halides, tributyl(tetradecyl)phosphonium halides, tributyl(hexadecyl)phosphonium halides, trihexyltetradecylphosphonium halides, dodecyltriphenylphosphonium halides, bis(triphenylphosphoniomethyl)benzene dihalides, benzyltriphenylphosphonium halides, tetraphenylphosphonium halides, or a combination thereof. Preferably, phosphonium salts suitable for the invention are tetrabutylphosphonium halides, tetraoctylphosphonium halides, tributyl(tetradecyl)phosphonium halides, tributyl(hexadecyl)phosphonium halides, trihexyltetradecylphosphonium halides or a combination thereof, and even more preferably, phosphonium salts suitable for the invention are tetrabutylphosphonium halides, tetraoctylphosphonium halides or a combination thereof.

Ammonium halide salts may be represented by the formula (II)

N⁺(R)₄ X⁻ (II)

wherein R and X⁻ are as defined in the present text.

Amongst the ammonium halide salts suitable for the present invention, may be cited tetraproylammonium halides, tetrabutylammonium halides, tetrapentylammonium halides, tetrahexylammonium halides, tetraheptylammonium halides, tetraoctylammonium halides, didodecyldimethylammonium halides, hexadecyltrimethylammonium halides, trimethyloctadecylammonium halides, cetyltrimethylammonium halides, tributylmethylammonium halides, tributyl(hexadecyl)ammonium halides, tributyl(tetradecyl)ammonium halides, trihexyltetradecylammonium halides and myristyltrimethylammonium halides. Preferably, the ammonium halide salts in a switchable stack according to the invention are chosen from tetrabutylammonium halide salts.

Amongst the tetrabutylammonium halide salts suitable for the present invention, may be cited tetrabutylammonium tetrafluoroborate (TBATFB), tetrabutylammonium chloride (TBACL), tetrabutylammonium bromide (TBAB), tetrabutylammonium Iodine (TBAI) and tetrabutylammonium hexafluorophosphate (TBAHFP). In particular, the tetrabutylammonium halide salts suitable for the present invention are chosen from TBATFB, TBACL, TBAB and TBAI. Preferably, the tetrabutylammonium halide salts suitable for the present invention is TBATFB.

In an embodiment of the invention, X⁻ is HSO₄⁻. In this embodiment, the salt ions are organic hydrogen sulfate salts, such as ammonium hydrogen sulfate salts, sulfonium hydrogen sulfate salts, phosphonium hydrogen sulfate salts, or a combination thereof. In said salts, the hydrogen sulfate part is represented by X⁻ in the formula (I).

Amongst the sulfonium halide salts suitable for the present invention, may be cited tributylsulfonium hydrogen sulfates, dimethyl(octyl)sulfonium hydrogen sulfates, (ethoxycarbonylmethyl)dimethylsulfonium hydrogen sulfates, dimethyl(2-phenylethyl)sulfonium hydrogen sulfates, benzyl(diethyl)sulfonium halide, dimethyl[1-(4-methylphenyl)ethyl]sulfonium hydrogen sulfates, [1-(dimethylamino)-4-pentenylidene]-2-propenylsulfonium hydrogen sulfates, [1-(dimethylamino)-3-methyl-4-pentenylidene]-2-propenylsulfonium halide, or a combination thereof. Preferably, sulfonium halide salts suitable for the invention are tributylsulfonium hydrogen sulfates.

Amongst the phosphonium halide salts suitable for the present invention, may be cited tetrabutylphosphonium hydrogen sulfates, tetraoctylphosphonium hydrogen sulfates, tetraphenylphosphonium hydrogen sulfates, tributylmethylphosphonium hydrogen sulfates, methyltriphenylphosphonium hydrogen sulfates, isopropyltriphenylphosphonium hydrogen sulfates, tributyl(tetradecyl)phosphonium hydrogen sulfates, tributyl(hexadecyl)phosphonium hydrogen sulfates, trihexyltetradecylphosphonium hydrogen sulfates, dodecyltriphenylphosphonium hydrogen sulfates, bis(triphenylphosphoniomethyl)benzene dihydrogen sulfates, benzyltriphenylphosphonium hydrogen sulfates, triphenylphosphonium hydrogen sulfates, or a combination thereof. Preferably, phosphonium salts suitable for the invention are tetrabutylphosphonium hydrogen sulfates, tetraoctylphosphonium hydrogen sulfates, tributyl(tetradecyl)phosphonium hydrogen sulfates, tributyl(hexadecyl)phosphonium hydrogen sulfates, trihexyltetradecylphosphonium hydrogen sulfates or a combination thereof, and even more preferably, phosphonium salts suitable for the invention are tetrabutylphosphonium hydrogen sulfates, tetraoctylphosphonium hydrogen sulfates or a combination thereof.

Amongst the ammonium hydrogen sulfate salts suitable for the present invention, may be cited tetrapropylammonium hydrogen sulfates, tetrabutylammonium hydrogen sulfates, tetrapentylammonium hydrogen sulfates, tetrahexylammonium hydrogen sulfates, tetraheptylammonium hydrogen sulfates, tetraoctylammonium hydrogen sulfates, didodecyldimethylammonium hydrogen sulfates, hexadecyltrimethylammonium hydrogen sulfates, trimethyloctadecylammonium hydrogen sulfates, cetyltrimethylammonium hydrogen sulfates, tributylmethylammonium hydrogen sulfates, tributyl(hexadecyl)ammonium hydrogen sulfates, tributyl(tetradecyl)ammonium hydrogen sulfates, trihexyltetradecylammonium hydrogen sulfates and myristyltrimethylammonium hydrogen sulfates. Preferably, the ammonium hydrogen sulfate salts in a switchable stack according to the invention are chosen from tetrabutylammonium halide salts. Even more preferably, the ammonium hydrogen sulfate salts suitable for the present invention is tetrabutylammonium hydrogensulfate (TBASO).

Accordingly, in an embodiment of the invention, the liquid crystal-based layer of the switchable stack comprises salt ions chosen from ammonium salts of formula (II)

N⁺(R)₄ X⁻ (II)

wherein X⁻ is as defined above,
and N⁺(R)₄ is chosen from tetrapropylammonium, tetrabutylammonium, tetrapentylammonium, tetrahexylammonium, tetraheptylammonium, tetraoctylammonium, didodecyldimethylammonium, hexadecyltrimethylammonium, trimethyloctadecylammonium, cetyltrimethylammonium, tributylmethylammonium, tributyl(hexadecyl)ammonium, tributyl(tetradecyl)ammonium, trihexyltetradecylammonium and myristyltrimethylammonium, in particular, said salt ions are chosen from tetrabutylammonium tetrafluoroborate (TBATFB), tetrabutylammonium chloride (TBACL), tetrabutylammonium bromide (TBAB), tetrabutylammonium iodine (TBAI), tetrabutylammonium hydrogensulfate (TBASO),
preferably, said salt ions are chosen from TBATFB, TBACL, TBAB and TBAI, and even more preferably, said salt ion is TBATFB.

Halide ions such as tetrafluoroborate -, chlorine, bromine, iodine ions have been tested.
- in peculiar salt with negative ion BF₄⁻, such as tetrabutylammonium tetrafluoroborate (TBATFB) having the following chemical structure :: 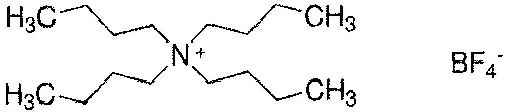
- in peculiar salt with negative ion CI-, such as Tetrabutylammonium chloride (TBACL) having the following chemical structure: 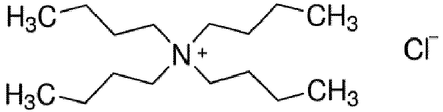
- in peculiar salt with negative ion Br-, such Tetrabutylammonium bromide (TBAB) having the following chemical structure: 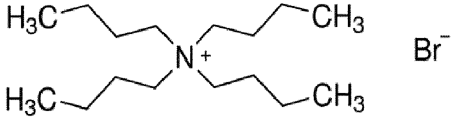
- in peculiar salt with negative ion I-, such Tetrabutylammonium iodine (TBAI) having the following chemical structure: 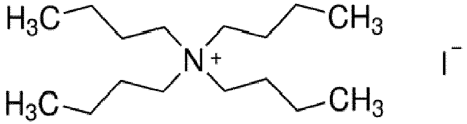
- in peculiar salt with negative sulfate ion HSO4-, as Tetrabutylammonium hydrogen sulfate (TBASO) having the following chemical structure:

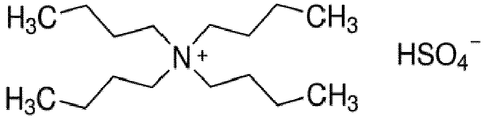

The same results have been observed in different host nematic LC with negative anistropies. The best ions are among halide ions. The most preferred ion is TBATFB having the best driving voltage and decay time.

We also tested salt with negative ion PF₆⁻, as Tetrabutylammonium hexafluorophosphate (TBAHFP) having the following chemical structure:

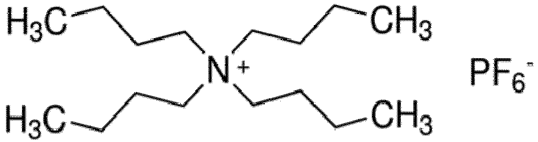

This ion TBAHFP isn't not satisfying in terms of solubility even at a quite low ion concentration.

As already said, preferred ion concentration range (for a given ion type) is also an important factor in DSM stack.

Preferably ions concentrations is larger than 0.01% in weight of said electroactive material for inducing correctly the DSM notably to have a sufficient level of Haze H2 notably at least 80%.

Increasing the ion concentration can also decrease the required driven voltage for a hazy state H2. At a given minimal "limit" concentration, there is often a saturation resulting in that the driving voltage becomes constant. The limit concentration is found of around 0.02% in weight of said material.

Therefore, said ions concentration can be higher or equal to 0.02% in weight of said electroactive material and even 0,05% in weight of said material.

Preferably said ions concentration is from 0.05% to 0.5% and even 0.3% or 0.25% in weight of said material. 0.05% or preferably 0.1% or 0.15% to 0.2% is the better range for electro-optical performance from experimentals. We found that Haze is stable while keeping reasonable driving voltage and power consumption.

In peculiar for ions concentration beyond 0.05% till 0.2%, Usat, Uth, Hmin, Hmax are quite stable. For said switchable stack, we can define a rising time Tr as response time from transparent to scattering (state) when application of U1 or a decay time as response time from scattering to transparent (state) when application of U1. The decay time decreases significantly (and also the rising time) so that we can prefer working around 0.2%±0.1% .

In peculiar for ions concentration beyond 0.2% till 0.5% Usat, Uth, H2 are quite stable and the decay time decreasing more slowly so that we prefer working around 0.2%%±0.1%.

We can choose the best preferred range based on both datas of decay time and power consumption.

Resulting from the selected ion, ion concentration range, selected nematic LC, or Ur1
- the decay time can be lower than 1s or even than 500ms or 300ms, for example with Ur1 under 60V or 40V,
- the decay time can be lower than 1s or even than 500ms, for example with Ur1 under 40V or 30V,
- and/or the power consumption is less than 100W/m², or even 30W/m²

Said switchable stack can comprise an alternative power supply having root mean square voltage Ur1, preferably square form, not more than 60V or 50V and even not more than 40V or 25V.

Preferably alternating U1 is (pseudo)periodical, with continuous component being zero, in peculiar (pseudo)sinusoidal, and most preferably square form. H1 can be preferably close to maximal haze Hmax (defined of a saturation voltage Ursat), Hmax-H1 being less than 5% or 2% or 1%).

The alignment layers can be both homogeneous (parallel) or both homotropic (vertical). Vertical alignment layer in DSM mode will have better haze in scattering mode.

The invention also proposed a liquid crystal mixture suitable for said electroactive layer as described previously notably comprising:
- nematic LC, preferably rod and untwisted, having Δε, which is lower than -3, and a birefringence Δn from 0.05 to 0.3
- salt ions with ions concentration being from 0.05% to 0.3% in weight of said mixture. The first electrode layer is, for example, made of a transparent conductive oxide, such as for example Indium Tin Oxide (also known under the acronym "ITO").

Preferably :
- the first and/or second alignment layer is a flexible layer
- the first and/or second alignment alignment layer is transparent
- a thickness of the first and/or second alignment layer is, for example, inferior or equal to 100 nanometers (nm)
- the first and/or second alignment layer is for example made of polyimide.

The first and/or second alignment layer is for example coated, for example using slit coating, or printed on the first electrode layer.

H1 can be preferably close to maximal haze Hmax (defined at a saturation voltage Usat), Hmax-H1 being less than 5% or 2% or 1%).

The haze is, for example, defined as the ratio of the diffuse transmission of light to the total transmission of light. It is expressed in %. We prefer measuring the haze using Hazemeter and notably Standard Haze meter like NDH7000, preferably using ASTM measurement standard (D1003). When haze H1 is less than 80%, its scattering degree is difficult to be used practically. Depending on customer demand we can choose H2 being lower or equal to Hmax which can be more than 80%.

The saturation voltage Usat increases as the frequency increased. The stack is switchable under different type of voltage function. However, the voltage function under square waveform has the lowest amplitude of voltage required.

U is preferably (pseudo)periodical, with continuous component being zero, in peculiar (pseudo)sinusoidal, and most preferably square form.

Of course, preferred range of frequencies allow the dynamic scattering mode DMS. Therefore, at an excessively high given frequency (usually called transition frequency), the liquid crystals are not to be switched to the scattering state. Notably said liquid crystals based layer having a transition frequency. The transition frequency is usually lower than 1000Hz then the given frequency f1 is under this transition frequency.

Also it is preferable that the given frequency f1 is not too low, in peculiar lower than 10 Hz, otherwise the violent ion accumulation is observed and cause additional poor electrooptic performance.

The voltage, has also preferably square form at frequency from 30 Hz to 100Hz.

Also the saturation voltage Usat corresponding to Hmax is almost the same from 30Hz to 100Hz and increases using the frequency higher than 100Hz. In peculiar there won't have differences between 50 Hz and 60 Hz because the liquid crystals mixture is not sensitive to the frequency in that range. Using 50Hz or 60Hz can depend on country regulations.

Substrate can be polymeric (polycarbonate (PC), polyethylene terephthalate (PET) or polymethyl methacrylate polymethyl methacrylate (PMMA)) or ultrathin glass (UTG).

In the description, "transparent" can designate an element through which it is possible to see, possibly without distortion.

The invention is in peculiar dedicated to any product having a full surface able to be transparent or scattering notably for privacy effect and/or for preventing from (sun) light. Any product can comprise one or more switchable stacks as already defined or one or more switchable zones of various shapes and /or sizes.

The invention also proposes a glazing unit chosen among one or more of the following products: laminated glazing, double or triple glazing unit, curved or plane glazing, including said switchable stack as described before.

For example a laminated glazing (plane or curved) includes:
- a first sheet transparent, plastic or glass (clear, extra clear, tinted), having first and second main faces
- a laminating interlayer (clear, extra clear, tinted) made of polymer notably PVB, EVA, in peculiar thermoplastic
- a second sheet transparent, plastic or glass (clear, extra clear, tinted), having third and four main faces, second and third faces facing each other, the switchable stack as defined previously being between second and third main faces and preferably embedded in the laminating interlayer.

For example a double or triple glazing unit comprises:
- a first sheet, transparent (clear, extra clear, tinted), preferably glass, having first and second main faces, first sheet being alone or optionally part of a laminated glazing
- a second sheet, transparent (clear, extra clear, tinted), preferably glass, having third and four main faces, second and third faces facing each other, or even a laminated glazing, second sheet being alone or optionally part of a laminated glazing
- first and second sheet being spaced (by vacuum or gas) and with a peripheral seal the switchable stack as defined previously being between second and third main faces (with adhesive etc) or on first or second main faces (with adhesive etc).

The CL layer can be sealed by any seal (polymeric etc) defining an electroactive area.

A length of the electroactive material forming the electroactive area can have a length superior of equal to 1 cm, preferably superior or equal to 5 cm and advantageously superior or equal to 10 cm.

A width of the electroactive material forming the electroactive area can have a length superior of equal to 1 cm, preferably superior or equal to 5 cm and advantageously superior or equal to 10 cm.

A length of the glazing including the switchable stack can be superior of equal to 1 cm, preferably superior or equal to 5 cm and advantageously superior or equal to 10 cm.

A width of the glazing including the switchable stack can be superior of equal to 1 cm, preferably superior or equal to 5 cm and advantageously superior or equal to 10 cm.

In laminated (automotive or building) glazing or even of double glazing unit, we can have:
- fourth main face (particularly the inside inner face, ie on the passenger compartment side fir vehicule or interior ot a room or house for building) can comprise an opaque layer (for example an enamel on the second inner mineral glass sheet or an opaque layer, particularly printed on the lamination interlayer) in a given zone, called masking zone, in particular peripheral,
- and/or the second main face (particularly the outside inner face) can comprise an opaque layer (for example an enamel on the first outer mineral glass sheet or an opaque layer, particularly printed on the lamination interlayer) in a given zone, called masking zone, in particular on the periphery.

In order to limit heating (eg in vehicule in the passenger compartment or to limit the use of air conditioning or in window for building), for a one of the laminated glazing glass sheets (preferably the outer glass) and/or the lamination interlayer is tinted.

And/or the laminated glazing can also comprise a layer reflecting or absorbing solar radiation, preferably on the fourth face F4 or on the second face F2 or third face F3 (with a transparent coating on the lamination interlayer on the F3 side in particular), in particular a transparent electrically conductive oxide layer, called TCO layer, or even a stack of thin layers comprising at least one TCO layer, or stacks of thin layers comprising at least one silver layer (preferably on F2 or F3), with the one or each silver layer being disposed between dielectric layers.

The layer (silver) on face F2 and/or F3 and the TCO layer on face F4 can be combined. For electrode layer of the stack or for this layer reflecting or absorbing solar radiation, the TCO layer (of a transparent electrically conductive oxide) is preferably a layer of fluorine-doped tin oxide (SnO₂:F) or a layer of mixed indium tin oxide (ITO).

Other layers are possible, including thin layers based on mixed indium-zinc oxides (referred to as "IZOs"), based on gallium-doped or aluminum-doped zinc oxide, based on niobium-doped titanium oxide, based on cadmium or zinc stannate, or based on antimony-doped tin oxide. In the case of aluminum-doped zinc oxide, the doping level (i.e., the weight of aluminum oxide with respect to the total weight) is preferably less than 3%. In the case of gallium, the doping level can be higher, typically within a range extending from 5 to 6%.

In the case of ITO, the atomic percentage of Sn is preferably within a range extending from 5 to 70% and in particular from 10 to 60%. For layers based on fluorine-doped tin oxide, the atomic percentage of fluorine is preferably at most 5% and generally from 1 to 2%.

In short, the glazing according to the invention advantageously can comprise a low-emissivity or solar-control layer, particularly on the fourth main face (F4) in laminated vehicule roof, particularly a coating comprising a metal oxide layer, such as ITO, or that is located on a plastic film (PET, etc.) between the first and second glass sheets, or even on the second main face, particularly a coating comprising a silver layer.

In short, the building glazing according to the invention advantageously can comprise a low-emissivity or solar-control layer on inner side a DGU or TGU particularly a coating comprising a silver layer.

The glass sheet can be (depending on the aesthetic result, the desired optical effect, the intended use of the glazing, etc.) a clear glass (with light transmission T_{L} that is greater than or equal to 90% for a thickness of 4 mm), for example a glass of standard soda-lime composition, such as Planilux^{®} from Saint-Gobain Glass, or an extra-clear glass (with T_{L} that is greater than or equal to 91.5% for a thickness of 4 mm), for example a soda-lime-silica glass with less than 0.05% of Fe(lll) or Fe₂O₃, such as the Diamant^{®} glass from Saint-Gobain Glass or the Optiwhite^{®} glass from Pilkington or the B270^{®} glass from Schott, or another composition described in document WO04/025334.

The glass of the glass sheet can be neutral (without coloring) or (slightly) tinted or colored (venus or TSA glass from Saint-Gobain Glass, etc.), have undergone chemical or thermal treatment of the hardening, annealing or tempering type (for better mechanical resistance in particular) or curving, and is generally obtained using a float method.

The glazing can have non-zero light transmission TL in all or part of the clear glass area (generally surrounded by enamel or another masking layer), and better still at least 40% or at least 50% or 70% of the clear glass area. For a vehicule roof (often tinted), non-zero light transmission TL is preferred, and even of at least 0.5% or of at least 2% and of at most 10% and even of at most 8%. For a rear side glazing (including quarter panel) or a rear window, non-zero light transmission TL is preferred, and even of at least 10% or of at least 20%, and in particular of at most 80% or of at most 70% (particularly a rear side glazing or a tinted window). For a front side glazing (particularly tinted), non-zero light transmission TL is preferred, and even of at least 50% or of at least 70%. For a windshield, non-zero light transmission TL is preferred, and even of at least 70%.

A glass sheet can be tinted and advantageously has overall light transmission ranging from 1.0% to 60.0% (in particular from 10.0% to 50.0%, and particularly from 20.0% to 40.0%). It also can have an optical transmission (determined in a known manner by taking the ratio of the transmitted intensity to the incident intensity at a given wavelength) of at least 0.5% for at least one wavelength, located in the visible domain, above 420 nm (and up to 780 nm), and preferably of at least 0.5% for all the wavelengths located in the domain ranging from 420 to 780 nm.

A length of the glazing including the switchable stack can be superior of equal to 1 cm, preferably superior or equal to 5 cm and advantageously superior or equal to 10 cm.

A width of the glazing including the switchable stack can be superior of equal to 1 cm, preferably superior or equal to 5 cm and advantageously superior or equal to 10 cm. The invention is in peculiar dedicated to product (glazing unit etc) having a full surface able to be transparent or scattering notably for privacy effect and/or for preventing from (sun) light.

Any product can comprise one or more switchable stacks as already defined or one or more switchable zones of various shapes and /or sizes.

The DSM stack can cover only a part of the glazing, notably forms one or several band. A DSM stack according to the invention already described is applicable:
- to the building notably integrated to one or more following glazing; monolithic glazing or laminated glazing (plane or curved), double or triple glazing.

Said glazing can be glazing for exterior walls, windows, door, interior partitions (including in humidity area such as, shower partition, etc.) or furniture, or other (interior) glazed surfaces.

One of said sheet of double glazing unit could be laminated glazing notably for window, facade, door.

More particularly, the DSM stack can be part (fixed on, with adhesives) of:
- an architectural glazing, i.e. glazing in buildings and on the envelope of buildings,
- an interior glazing such as a room interior glazing, partition glazing, interior windows and doors for offices, hotel rooms, shops, restaurants, homes, private rooms, patient rooms, medical spaces, operation rooms, intensive care unit rooms and x-ray rooms, bathrooms, for example shower compartment glazing,
- equipment manufacturing (e.g. glazing for refrigerators, microwaves, furniture, lighting, ...)
- to projecting screen.
- to vehicles such as motor vehicles, buses, railway vehicles or aircraft, to any part of glazing notably curved glazing, laminated or not, such as roof, windshield, lateral glazing, sidelites, etc.

In peculiar a motor vehicle include a car, particularly a commercial vehicle (van, small truck, dispatch van) weighing less than 3.5 tons (I utility vehicle), or even can be a truck or even a shuttle, small private or public transport vehicle. The side glazings can be in sliding doors. The vehicule glazing can be in a rear door.

In particular, the glazing forms a windshield, a roof or a side glazing (front or rear quarter panel included).

In the present example, the stack and/or a glazing is planar or convex.

The glazing is, for example, a monolithic glazing. The monolithic glazing comprises a single transparent pane.

A glazing can be a sheet of glass, particularly preferably soda-lime glass, as is customary for window. However, the pane may also be made of other types of glass, for example quartz glass, borosilicate glass or alumino-silicate glass,

The glazing can be made of non-tempered, partially-tempered or tempered glass. The thickness of the pane can vary widely and be adapted to the requirements in individual cases.

A glazing can be a sheet of plastic, for example polycarbonate, or polymethyl methacrylate.

Preferably, for vehicle applications, the thickness of the glazing (notably of glass) is from 0.1 mm to 10 mm and, in the case of glass, preferably from 1 mm to 5 mm, most preferably from 1.4 mm to 3 mm.

For building applications, the thickness of the glazing (notably of glass) is from 1 mm to 12 mm, for example from 3 mm to 8 mm and for example from 3 mm to 6 mm.

The transparent glazing (notably of glass) may be clear, extra clear or tinted.

The interlayer layer may be clear, extra clear or tinted for example thermoplactic such as Polyvinyl butyral (also known under the acronym "PVB"), thermoplastic polyurethane (TPU), ethylene vinyl acetate copolymer (EVA), ionomer. An example of a monomer resin is marketed by Kuraray under the registered trademark SentryGlas^{®}.

For example, the thickness of the interlayer is greater than or equal to 0.3 mm and/or inferior or equal to 2 mm, for example greater than or equal to 0.6 mm and inferior or equal to 1.6 mm.

The lamination interlayer for (vehicle or building) glazing can be acoustic, in particular it can comprise or consist of an acoustic PVB (three-layer, four-layer, etc.). Thus, the lamination interlayer can comprise at least one layer, called central layer, made of viscoelastic plastic with vibro-acoustic damping properties, particularly based on polyvinyl butyral and plasticizer, and the interlayer, and further comprising two external layers made of standard PVB, with the central layer being between the two external layers. Mention may be made of the acoustic PVBs described in the patent applications WO2012/025685, WO2013/175101, in particular tinted as in WO2015079159.

The lamination interlayer for (vehicle or building) glazing or can comprise a sheet based on (made of) poly(vinyl butyral) (PVB) containing fr eaxmple more than 30% by weight of plasticizers.

In laminated (vehicle or building) glazing, the inner glass sheet can be made of organic glass (preferably rigid, semi-rigid) such as a polymethyl methacrylate (PMMA), preferably with a lamination interlayer (PU), a polycarbonate (PC), preferably with a PVB lamination interlayer.

In particular, the laminated (vehicle or building) glazing can be selected as a first glass sheet/lamination interlayer/second glass sheet:
- mineral glass/PVB (acoustic, etc.)/mineral glass,
- even mineral glass/lamination interlayer/polycarbonate,
- or even polycarbonate (thick or thin)/lamination interlayer/mineral glass.

The switchable stack can cover only a part of the building glazing, notably forms a band. Said glazing can be glazing to vehicles such as motor vehicles, buses, railway vehicles or aircraft, to any part of glazing notably curved glazing, laminated or not, such as roof, windshield, lateral glazing, sidelites, etc.

The switchable stack can cover only a part of the vehicle glazing, notably forms a peripheral band (in upper part of windshield, lateral glazing, sidelites) or frame or nearly cover the glazing (in one of several parts) for example for roof.

The invention and its advantages will be better understood upon reading the following description, which is given solely by way of non-limiting examples and which is made in reference to the appended drawings in which:
Figure 1 is a schematic view of a switchable DSM stack 100 in clear state in off stage according to an embodiment of the present invention.
Figure 2 is a schematic view of the switchable DSM stack of figure 1 in scattering state.
Figure 3 is a graph showing Uth and Usat in function dielectric anisotropy Δε of LC nematic rod like of various switchable DSM stack.
Figure 4 is a graph showing a haze value H(%) of switchable DSM stack in function of the applied-voltage U(V) for five ions tested respectively called 1, 2 , 3 , 4, 5 in the graph in LC1 mixture.
Figure 5 is a graph showing a haze value H(%) of switchable DSM stack in function of the applied-voltage U(V) for five ions in the graph in LC2 mixture according of the present invention.
Figure 6 is a graph showing power per square meter of switchable DSM stack in function of the applied voltage U(V) for five ions in LC2 mixture according to the present invention.
Figure 7 is a graph showing the decay time of switchable DSM stack in function of the applied voltage U(V) for four ions in LC2 mixture according to the present invention.
Figures 8a, 8b, 8c are three POM images
Figure 9 is a graph showing a haze value H(%) of switchable DSM stack in function of the applied-voltage U(V) for several ion of ion "1" in LC1 mixture.
Figure 10 is a graph showing a voltage U(V) of switchable DSM stack in function of the ion concentration of ion "1" tested in LC2 mixture.
Figure 11 is a graph showing a decay time of switchable DSM stack in function of the ion concentrations of ion "1" in LC2 mixture.
Figure 12 is a graph showing a power per square meter of switchable DSM stack in function of ion concentration of ion "1" in LC2 mixture.
Figure 13 is a schematic cross sectional view of a switchable DSM stack according to the invention
Figure 14 is a schematic cross sectional view of a switchable DSM stack according to the invention in a variant of figure 13.
Figure 15 is a schematic facing view of a switchable DSM stack according to the invention.
Figure 16 is a schematic facing view of a switchable DSM stack according to the invention.
Figure 17 is a schematic cross sectional view of a system according to the invention.
Figure 18 is a schematic cross sectional view of a laminated glazing according to the invention.
Figure 19 is a schematic cross sectional view of a double glazing unit (DGU) 400 according to the invention.
Figure 20 is a schematic facing view of a laminated glazing comprising a local switchable DSM stack 100 as shown in figure 13.
Figure 21 is a cross sectional view of said laminated glazing of figure 20.
Figure 22 is a schematic cross sectional view of a curved laminated glazing comprising switchable DSM stack of the invention.

Before describing the invention, it is to be understood that it is not limited to the details of construction set forth in the following description. It will be apparent to those skilled in the art having the benefit of the present disclosure that the invention is capable of other embodiments and of being practiced or being carried out in various ways.

It is also to be understood that the dimensions of the different elements are not to scale on the drawings.

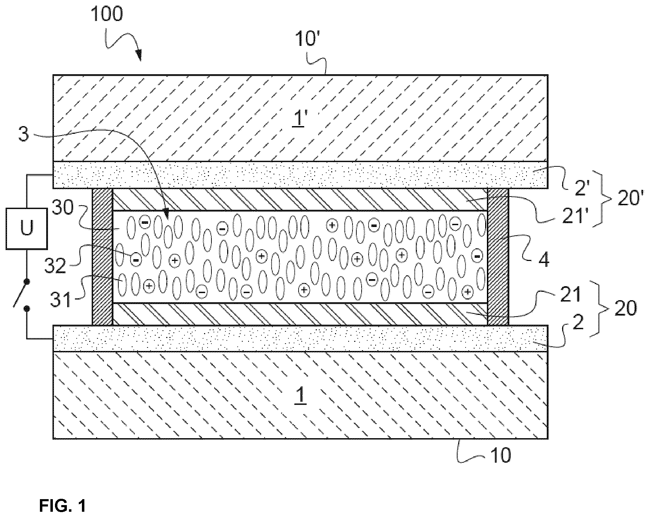

Figure 1 is a schematic view of a switchable DSM stack 100 in clear state in off stage according to an exemplary embodiment of the present invention.

The switchable stack 100 comprising two transparent dielectric substrates 1,1', each of said substrates having muticoating 20,20' including one electrode layer 2, 2' and one alignment layer 21, 21' over the electrode layer, and, located between the alignment layers, a liquid crystals based layer 3 of a electroactive material 30 comprising nematic liquid crystals 31 and ions 32, (spacers not shown here).

The CL layer is sealed by any seal (polymeric etc) 4 defined an electroactive area.

It uses the Dynamic Scattering Mode (DSM), based on electrohydrodynamic effect induced by the dynamic balance between the rotation of the LC and the diffusion of the ions.

The stack is in transparent clear state (very low Haze level) without voltage and even very low Haze even in large viewing angle, liquid crystals being for example perpendicular to substrates (the first alignment layers being homeotropic forcing the liquid crystals to align).

Substrate can be flexible such as polymeric (polycarbonate, polyethylene terephthalate (PET) or polymethyl methacrylate etc) or ultrathin glass (UTG).

Main exterior faces 10, 10' could be free surfaces or stuck to any device such as glazing unit.

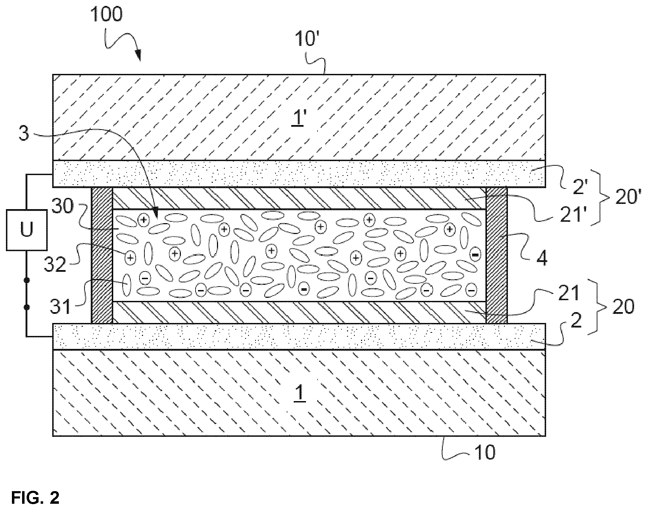

Figure 2 is a schematic view of the switchable DSM stack 100 of figure 1 in scattering state with is in then operation stage.

Under alternating voltage, the stack is in scattering state (very hazy) with voltage, ions movement creating convection cells tending to orientate liquid crystals randomly.

The power supply source is a generator of square periodic voltage with first root mean square value Ur1 at one frequency preferably from 30Hz to 100Hz.

### Examples of DSM stack including a electroactive layer based on nematic LC and salt ions

We test 18 liquid LC forming a mixture with one halide ion of 0,2% in weight. The datas are in the following tables.

| | Δn | Δε | H1 | Uth (V) | Usat (V) |
|---|---|---|---|---|---|
| LC1 | 0.0984 | -4.8 | 94.89 | 9.2 | 17.8 |
| LC2 | 0.102 | -5 | 94.35 | 6.53 | 16.58 |
| LC3 | 0.256 | -4 | 99.09 | 8.3 | 17.66 |
| LC4 | 0.16 | -4 | 98.37 | 10.1 | 17.45 |
| LC5 | 0.07 | -6.1 | 84.76 | 6.6 | 12.81 |
| LC6 | 0.076 | -5.7 | 88.53 | 8.32 | 14.8 |
| LC7 | 0.08 | -4.8 | 89.93 | 8.44 | 15.32 |
| LC8 | 0.08 | -4.4 | 88.55 | 6.5 | 15.1 |
| LC9 | 0.105 | -3.9 | 94.71 | 10.02 | 26.86 |
| LC10 | 0.104 | -4.6 | 95.94 | 8.68 | 17.78 |
| LC11 | 0.104 | -3.3 | 94.33 | 15.47 | 32.31 |
| LC12 | 0.1 | -4 | 96.19 | 9.03 | 20.94 |
| LC13 | 0.11 | -4 | 96.86 | 8.69 | 19.55 |
| LC14 | 0.098 | -3.4 | 94.39 | 13 | 27.94 |
| LC15 | 0.1081 | -3.7 | 94.59 | 9.03 | 32.1 |
| LC16 | 0.1074 | -3.6 | 95.76 | 9.08 | 26.65 |
| LC17 | 0.088 | -7 | 96.11 | 8.85 | 17.15 |
| LC18 | 0.075 | -14.2 | 87.098 | 12.5 | 28.3 |

We also have the temperature transition of rotational viscosity for those LC as shown in the following table

| | S→ N(°C) | N→ Iso (°C) | r1 (mPa*s) |
|---|---|---|---|
| LC1 | | 75 | 96 |
| LC2 | -30 | 126 | 53 |
| LC3 | -40 | 104 | 44 |
| LC4 | -40 | 103 | 34 |
| LC5 | -40 | 100 | 39 |
| LC6 | -40 | 100 | 40 |
| LC7 | -40 | 95 | 17 |
| LC8 | -40 | 105 | 42 |
| LC9 | -30 | 80.8 | 139 |
| LC10 | | 81.1 | 151 |
| LC11 | | 81.1 | 131 |
| LC12 | | 82.9 | 142 |
| LC13 | | 78.1 | 141 |
| LC14 | | 75 | 93 |
| LC15 | | 79.9 | 73 |
| LC16 | | 79.9 | 84 |
| LC17 | -40 | 96 | 48 |
| LC18 | -30 | 82.4 | 211 |

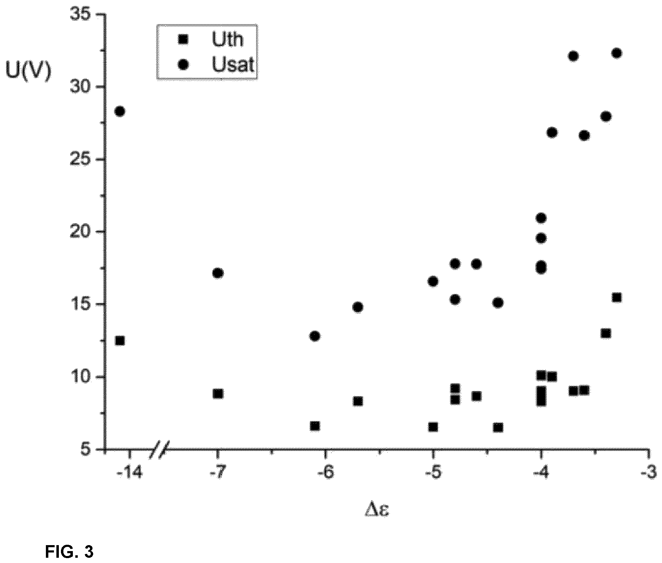

Figure 3 is a graph showing Uth (the threshold voltage as last value with Hmin) and Usat (the voltage for Hmax) in function various dielectric anisotropy Δε of LC nematic rod like of various switchable DSM stack.

After testing 18 liquid crystals with different characteristics, we can find that the driving voltage will dramatically increase when the dielectric anisotropy of LC larger than -4 or smaller than -7. Because the dynamic scattering is the dynamic balance between the rotation of the LC and the diffusion of the ions. Therefore, too small dielectric anisotropy (smaller than -7) will increase the torque of the liquid crystal rotation, resulting in the need for larger voltages to generate disturbances. However, too large dielectric anisotropy (larger than -4) will make the liquid crystal unable to be rotated, resulting in the need for a larger voltage to balance the perturbation produced by the ions.

After testing 18 liquid crystals with different characteristics, we can find that the greater the birefringence, the better the haze. Most birefringence in commercially available LC with negative dielectric anisotropy is less than -0.15. As far as we know increasing the birefringence the LC will have influence on electrical properties and long-term reliability. Based on the special LC with birefringence 0.255 from supplier, It is confirmed that have larger birefringence of the LC have better haze in scattering state.

We test five ions called Ion 1 to Ion 4 which are halide ions base on tetrafluoroborate, chlorine, bromine, iodine ions, and Ion 5 is the sulfate ions. Those five ions are respectively TBATFB, TBACL TBAB, TBAI, TBASO.

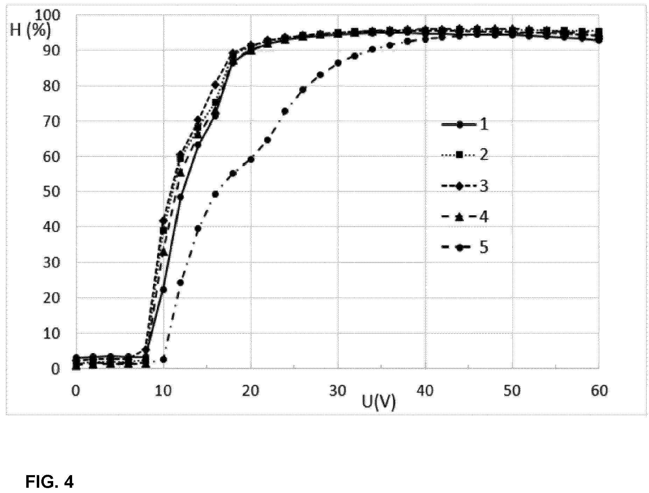

Figure 4 is a graph showing a haze value H(%) of switchable DSM stack in function of the applied-voltage U(V) for those five ions tested respectively called 1, 2 , 3 , 4, 5 in the graph in LC1 mixture.Transmittance T (%) is above 80%

Figure 4 demonstrates the test results of the host LC with thosedifferent type of ions. In voltage-haze curve, the optical performance in the case of using sulfate ions (Ion 5) is apparently worse than using halide ions (Ion 1 to 4).

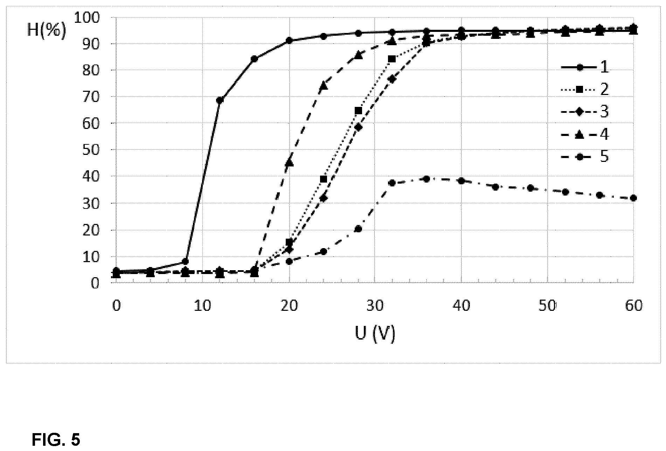

Figure 5 is a graph showing a haze value H(%) of switchable DSM stack in function of the applied-voltage U(V) for five ions in the graph in LC2 mixture according of the present invention.

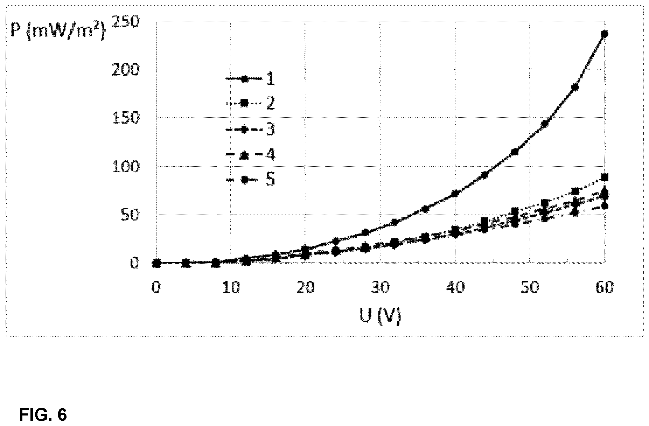

Figure 6 is a graph showing power per square meter of switchable DSM stack in function of the applied voltage U(V) for five ions in LC2 mixture according to the present invention.

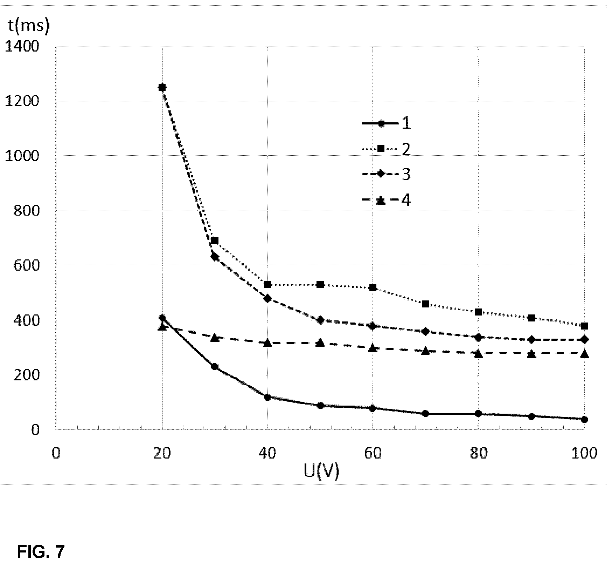

Figure 7 is a graph showing the decay time of switchable DSM stack in function of the applied voltage U(V) for four ions in LC2 mixture according to the present invention.

In LC2, not only the voltage-haze curve, the response time and the power consumption are also tested. In voltage-haze curve, the result from halide ion doped LC2 have better performance. The Ion 1 doped LC have the best driving voltage and response time. It revealed that the diffusion of the ions is more severe than other ions. That is the reason why the power consumption is also the largest. Therefore, the halide ions doped LC are the best features in DSM.

We test the solubility in LC1 and LC2 mixture of ions 1 to 5 and also another ion which is TBAHFP. The results are in the 2 following tables.

| LC 1 | | | | | | |
|---|---|---|---|---|---|---|
| Ion | TBATFB | TBACL | TBAB | TBAI | TBASO | TBAHFP |
| Soluble | Yes | Yes | Yes | Yes | Yes | No |

| LC2 | | | | | | |
|---|---|---|---|---|---|---|
| Ion | TBATFB | TBACL | TBAB | TBAI | TBASO | TBAHFP |
| Soluble | Yes | Yes | Yes | Yes | Yes | No |

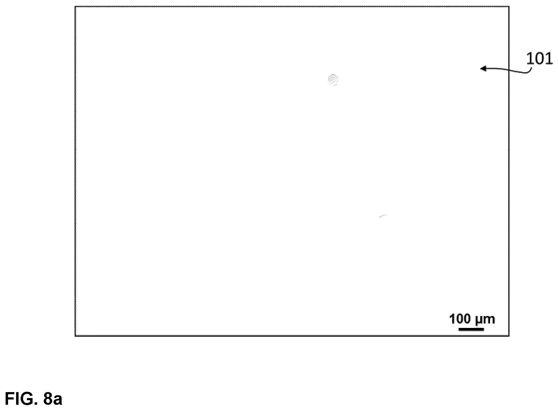

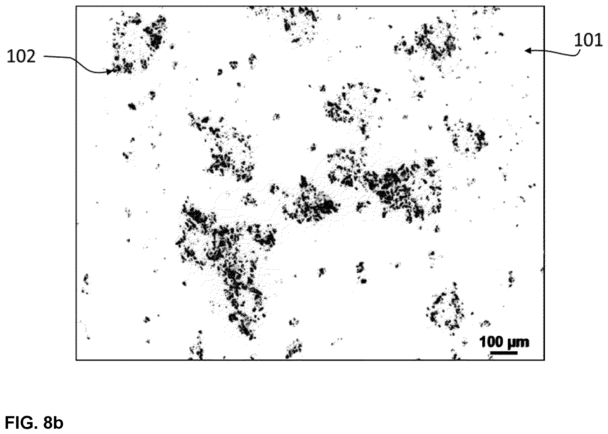

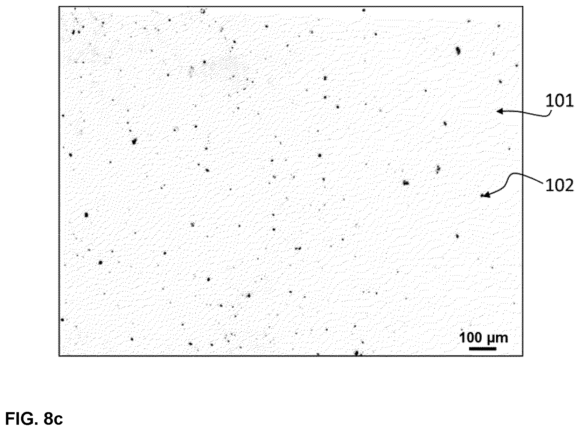

Figures 8a, 8b, 8c are three POM images (with contrast inversion).

Figure 8a refers to a mixture having LC2 with 0.2% TBATAB.

There are no ion aggregation. The POM image is totally white (101 white surface) which means the LC are perfectly aligned.

Figure 8b refers to a mixture having LC2 with 1% TBATAB. There are some light leakages in the POM image which means the ion aggregation 102.

Figure 8c refers to a mixture having the LC2 with 0.2% TBAHFP. The ion aggregation 102 are apparently observed.

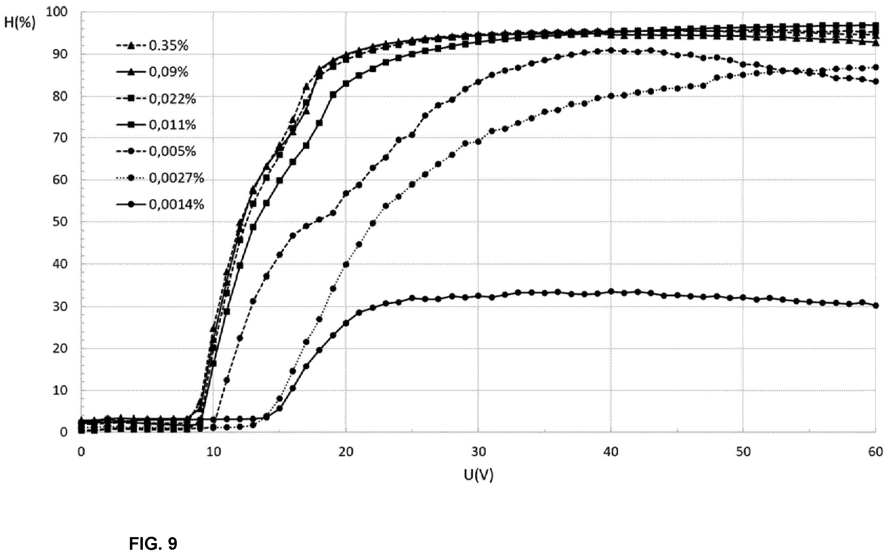

Figure 9 is a graph showing a haze value H(%) of switchable DSM stack in function of the applied-voltage U(V) for several ion concentration ions of ion 1 in LC1 mixture.

The voltage-haze curve in LC1 with the ion concentration from 0.0014% to 0.35% are presented. It revealed that the ion concentration is also an important factor in DSM. It revealed that the ions preferably need to be larger than 0.01% for inducing the DSM. Increasing the ion concentration can decrease the driving voltages. It will be saturated as the concentration up to 0.022%.

The same results are also observed in Ion I doped LC2. The test results of the driving voltage, response time, and the power consumption based on LC2 with the ion concentration from 0.00625% to 0.4% are presented hereafter.

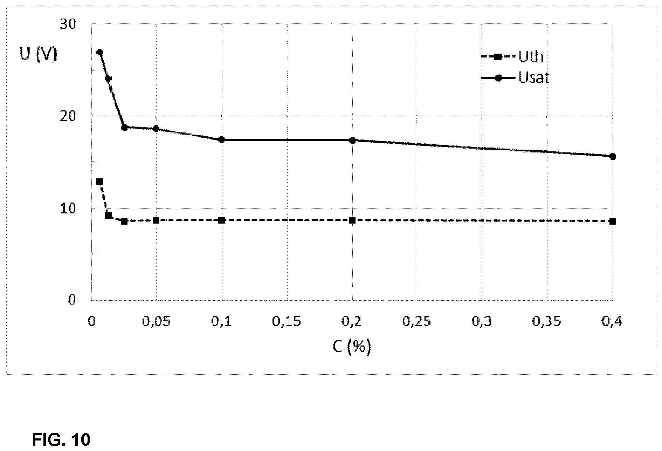

Figure 10 is a graph showing a voltage U(V) of switchable DSM stack in function of the ion concentration of ion "1" tested in LC2 mixture.

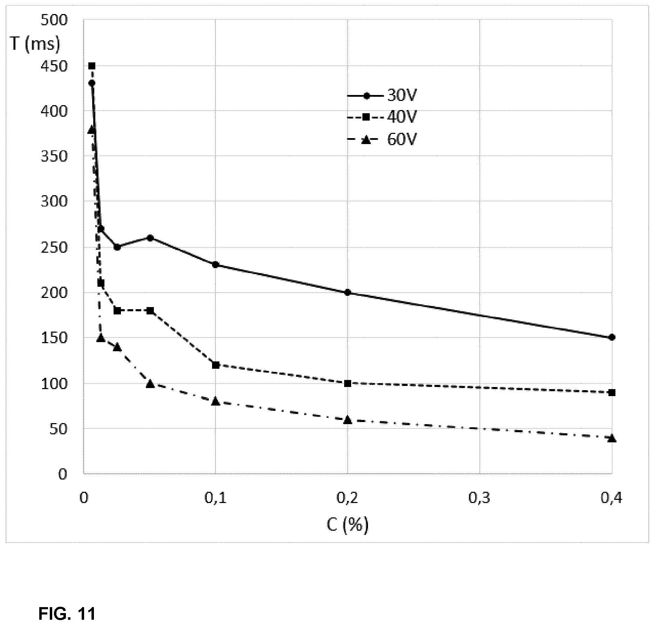

Figure 11 is a graph showing a decay time of switchable DSM stack in function of the ion concentrations of ion "1" in LC2 mixture.

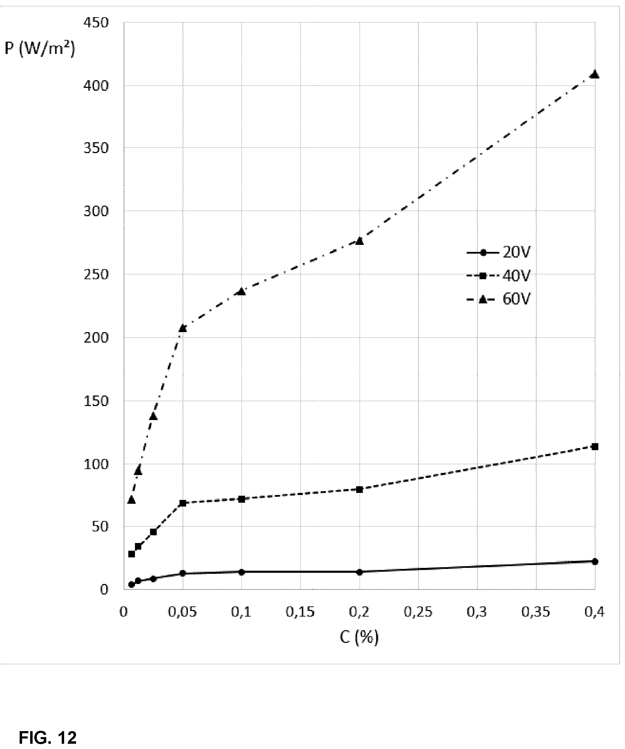

Figure 12 is a graph showing a power per square meter of switchable DSM stack in function of ion concentration of ion "1" in LC2 mixture.

In LC 2, the driving voltage and the decay time (the optical response time after releasing the voltages) are decreasing as the ion concentration increased. However, the larger power consumption are also observed when increasing the ion concentration. It revealed that the ions preferably need to be larger than 0.00625% for inducing the DSM. Increasing the ion concentration to 0.025% will rapidly decrease the driving voltage and accelerate the decay time. Although the decreasing going slow down after the concentration more than 0.025%, the driving voltage decay time are also further improved. However, the power consumption will increase rapidly between 0.0625%-0.05%, but slow down after the concentration more than 0.05%. The haze has no apparent difference. Therefore, 0.05%-0.5% is an appropriate range and even 0.1%-0.3%.

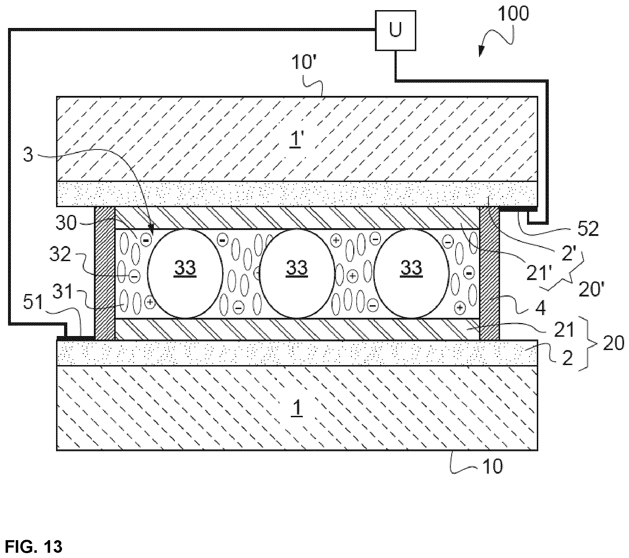

Figure 13 is a schematic cross sectional view of a switchable DSM 100 stack according to the invention

The switchable stack 100 comprising two transparent dielectric substrates 1,1', each of said substrates having muticoating 20,20' including one electrode layer 2, 2' and one alignment layer 21, 21' over the electrode layer, and, located between the alignment layers, a liquid crystals based layer 3 of a electroactive material 30 comprising nematic liquid crystals 31 and ions 32, and spacers33 The CL layer is sealed by any seal (polymeric etc) 4 defined an electroactive area.

Substrate can be flexible such as polymeric (polycarbonate, polyethylene terephthalate (PET) or polymethyl methacrylate etc) or ultrathin glass (UTG).

Main exterior faces 10, 10' could be free surfaces or stuck to any device such as glazing unit.

Electrodes 2, 2' go beyond the electroactive area for making two connections zones notably with two bus bars 51,52 here on opposite side.

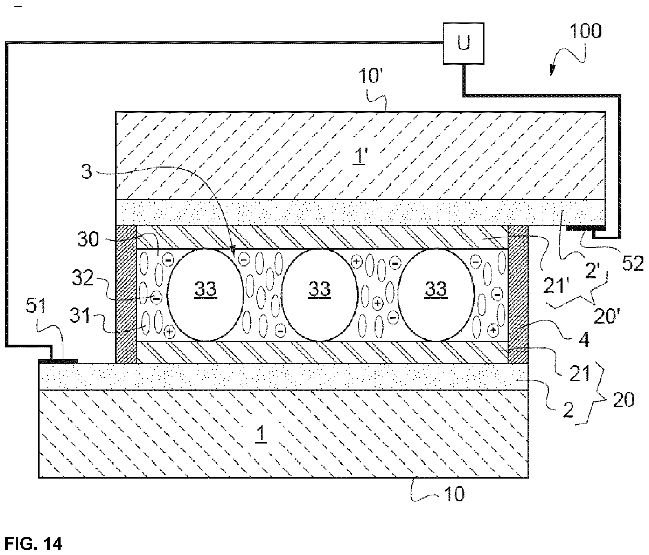

Figure 14 is a schematic cross sectional view of a switchable DSM stack according to the invention in a variant of figure 13 wherein we cutted edges of substrates 1,1'.

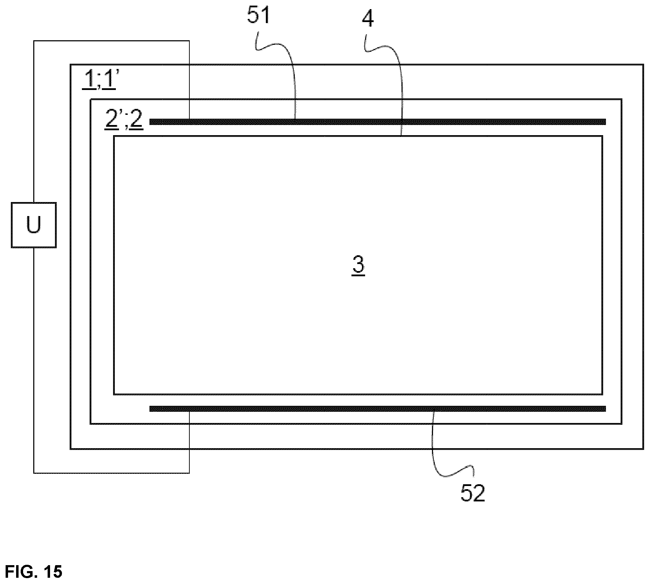

Figure 15 is a schematic facing view of a switchable DSM stack according to the invention showing the boundaries of seal 4 defining the electroactive area 3, of electrodes 2,2' extended beyond the seal in at least for two connected zones with bus bar lines 51, 52 in opposite longitudinal borders of the substrates 1,1'.

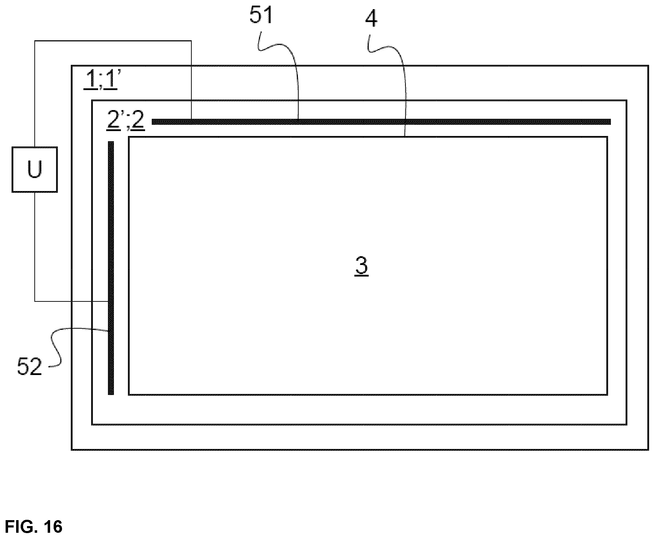

Figure 16 is a schematic facing view of a switchable DSM stack according to the invention showing the boundaries of seal 4 defining the electroactive area 3, of electrodes 2,2' extended beyond the seal 4 in at least for two connected zones with bus bar lines 51, 52 in adjacent (longitudinal and lateral) borders of the substrates 1,1'.

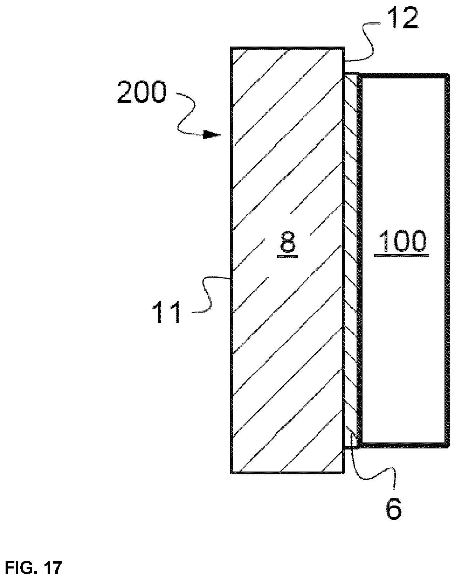

Figure 17 is a schematic cross sectional view of a system 200 comprising a flat monolithic glazing 8 having stuck on one of its main faces 11,12 with adhesive 6 a switchable DSM stack 100 as shown in figure 13.

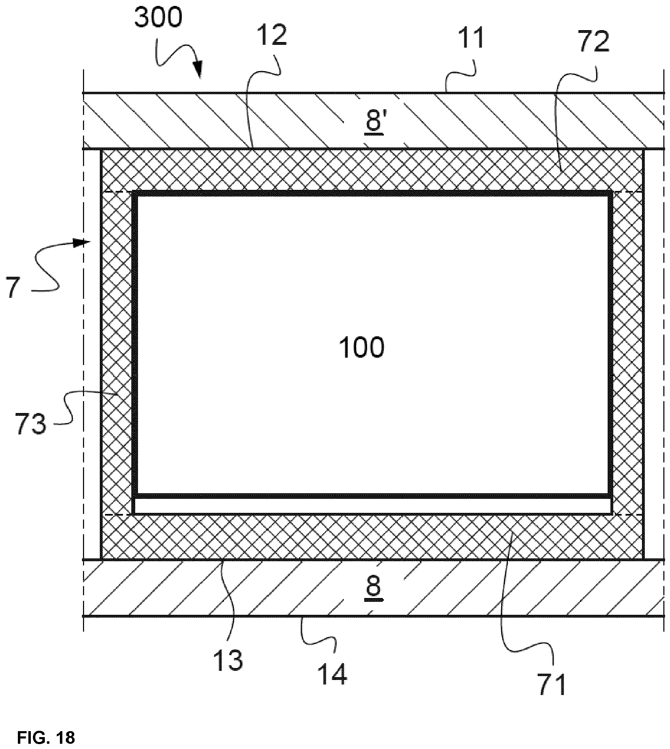

Figure 18 is a schematic cross sectional view of a laminated glazing 300 comprising two glazing 8, 8' with four mains faces 11, 12 ,13 ,14 and in between an interlayer 7 (such as PVB) in three parts two main films 71, 72,and one frame 73, and embedded in interlayer 7 a switchable DSM stack 100 as shown in figure 13 having more or less thickness of the frame 73.

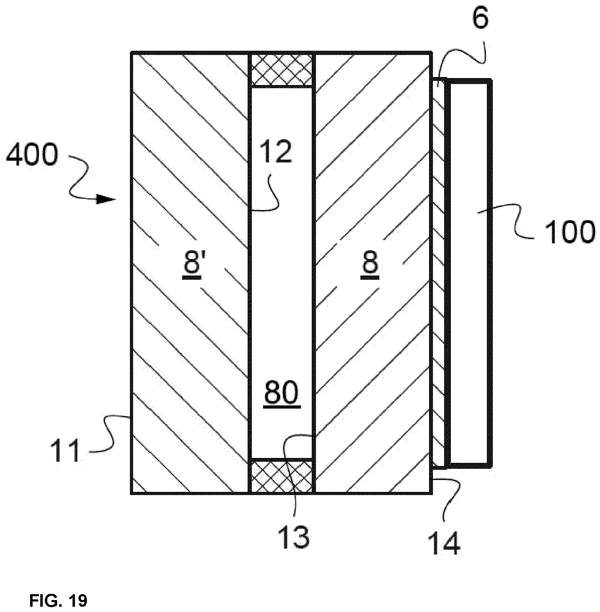

Figure 19 is a schematic cross sectional view of a double glazing unit (DGU) 400 comprising two glazings 8, 8' spaced from each other by vacuum or air 80 and sealed by a peripheral sealing and a switchable DSM stack 100 as shown in figure 13 stuck (by adhesive 6) in any of the exterior or interior main faces 11,12,13,14 of said DGU.

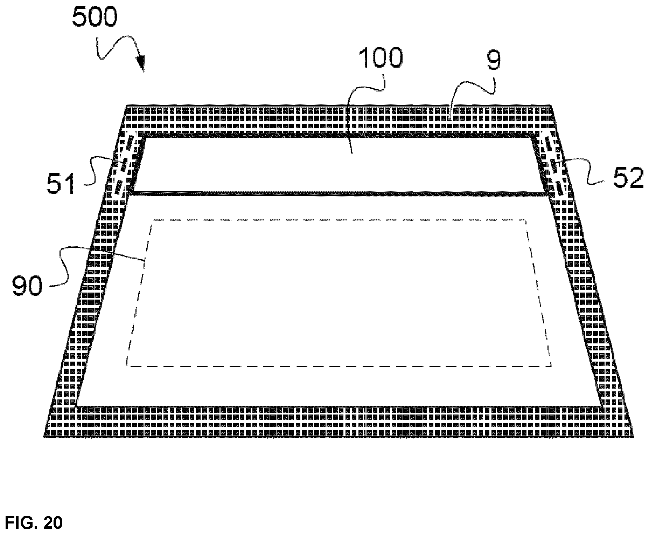

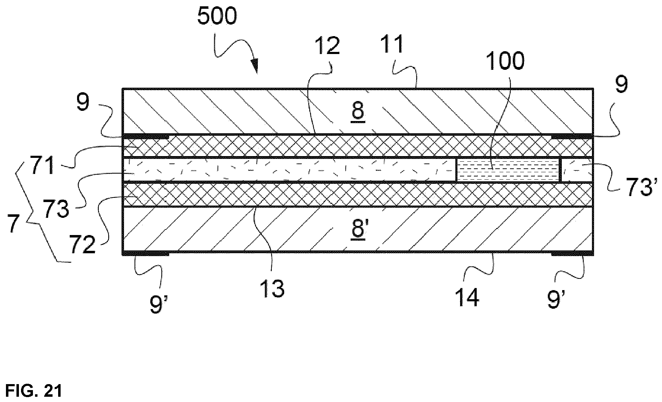

Figure 20 is a schematic facing view of a laminated glazing 500 comprising a local switchable DSM stack 100 as shown in figure 13. Figure 21 is a cross sectional view of said laminated glazing 500.

Said laminated glazing 500 comprising a two glazing 8, 8' and in between an interlayer 7 (such as PVB) in three parts: two main films 71, 72,and one frame 73, and embedded in interlayer 7 a local switchable DSM stack 100 as shown in figure 13 forming a band notably in upper part of the glazing. For example the bus bar 51 and 52 are hidden by enamel black first masking layer 9 forming a frame and present in interior face F2 and by enamel black second masking layer 9' forming a frame and present in exterior face F4 as shown is the facing view of figure 21.

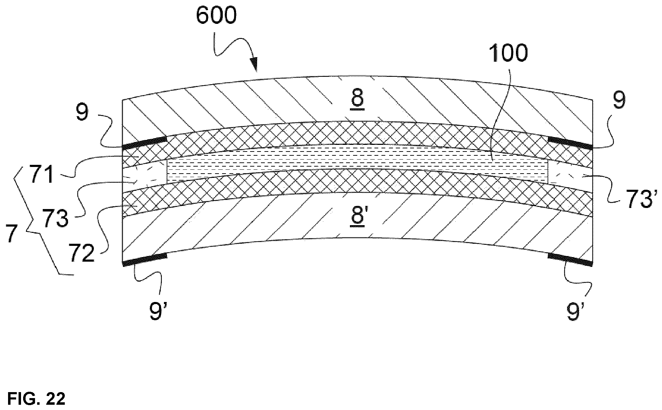

Figure 22 is a schematic cross sectional view of a curved laminated glazing 600 comprising switchable flexible DSM stack 100, extending to a major part of the main face of the glazing.

## Claims

1. Switchable stack (100) comprising first and second transparent dielectric substrates (1,1') respectively having first and second transparent electrode layer '2,2') and first and second alignment layers (21,21') respectively over the first and second electrode layers, and, located between the first and second alignment layers, an electroactive layer (3) of an electroactive material (30) comprising nematic liquid crystals, called nematic LC (31), with dielectric anisotropy Δε and ions (32), in which the switchable glass is in a transparent state without applied voltage, and when an alternating voltage is applied to the switchable stack, the switchable stack being a scattering state,
in which :
- said nematic LC having Δε which is lower than -3, preferably-3,5
- said nematic LC being at least 80% in weight of said electroactive material
- said ions concentration being larger than 0.005% and lower or equal than 1% in weight of the sum of weights of said nematic LC and ions.

2. Switchable stack as claimed in claim 1 wherein Δε is from -7 to -4.

3. Switchable stack as claimed in any of preceding claims wherein said nematic LC has a birefringence Δn from 0.05 to 0.3.

4. Switchable stack as claimed in any of preceding claims wherein said nematic LC are rod LC, untwisted nematic LC.

5. Switchable stack as claimed in any of preceding claims wherein the electroactive material comprises of at least 99% or even 99.5% by weight of the sum of weights of said nematic LC and ions.

6. Switchable stack as claimed in any of preceding claims wherein said electroactive material is devoid of ions precipitation.

7. Switchable stack as claimed in any of preceding claims wherein said electroactive material exibits a rotational viscosity greater than or equal to 0.01 Pa.s and less than or equal to 2 Pa.s, preferably from 0.02 Pa.s to 0,3 Pa.s.

8. Switchable stack as claimed in any of preceding claims wherein said salt ions are chosen from zwitterions and salts of the formula (I)
A⁺(R)ₙ X⁻ (I)
wherein
A is chosen from N, P and S, in particular A is N;
when A is S, n is 3;
when A is N or P, n is 4
R are identical or different and selected from a hydrogen atom or branched or linear hydrocarbon chains, optionally comprising heteroatoms, notably devoid of oxygen, in particular R are aliphatic chains devoid of heteroatoms and comprising at least 3 carbon atoms, preferably R are identical C₃-C₁₈ alkyl chains;
X⁻ is chosen from an entity comprising at least one halogen atom, HSO₄⁻, H₂PO₄⁻, NO₃⁻, NO₂⁻, HCO₃⁻ in particular X⁻ is chosen from HSO₄⁻ or an entity comprising at least one halogen atom, excluding PF₆⁻, preferably X⁻ is chosen from F-, Cl⁻, Br, I⁻ and BF₄⁻, even more preferably, X⁻ is BF₄⁻.

9. Switchable stack as claimed in preceding claim wherein said salt ions are chosen from ammonium salts of formula (II)
N⁺(R)₄ X⁻ (II)
wherein X is as defined in preceding claim,
and N⁺(R)₄ is chosen from tetrapropylammonium, tetrabutylammonium, tetrapentylammonium, tetrahexylammonium, tetraheptylammonium, tetraoctylammonium, didodecyldimethylammonium, hexadecyltrimethylammonium, trimethyloctadecylammonium, cetyltrimethylammonium, tributylmethylammonium, tributyl(hexadecyl)ammonium, tributyl(tetradecyl)ammonium, trihexyltetradecylammonium and myristyltrimethylammonium, in particular, said salt ions are chosen from tetrabutylammonium tetrafluoroborate (TBATFB), tetrabutylammonium chloride (TBACL), tetrabutylammonium bromide (TBAB), tetrabutylammonium iodine (TBAI), tetrabutylammonium hydrogen sulfate (TBASO),preferably, said salt ion are chosen from TBATFB, TBACL, TBAB and TBAI, and even more preferably, said salt ion is TBATFB.

10. Switchable stack as claimed in any of preceding claims wherein said ions is tetrabutylammonium tetrafluoroborate TBATFB.

11. Switchable stack as claimed in any of preceding claims wherein said ions concentration being from 0.02% to 0.5% in weight of said electroactive material.

12. Switchable stack as claimed in any of preceding claims, wherein said ions concentration being from 0.05% to 0.3% in weight of said electroactive material.

13. Glazing unit chosen among one or more of the following products :monolithic glazing, laminated glazing, double or triple glazing unit, said glazing unit being curved or plane, including said switchable stack as claimed in any of preceding claims.

14. Building product including said switchable stack or said glazing unit as claimed in any of preceding claims, preferably chosen among: architectural glazing, or interior glazing such as a room interior glazing, partition glazing, interior windows and doors for offices, hotel rooms, shops, restaurants, homes, private rooms, medical spaces, bathrooms, for example shower compartment glazing, glazing for refrigerators, microwaves, furniture, lighting.

15. Liquid crystal mixture suitable for electroactive material of said electroactive layer according any of preceding claims 1 to 12 comprising:
- nematic liquid crystals, called nematic LC, preferably rod and untwisted, having Δε which lower than -3, and preferably a birefringence Δn from 0.05 to 0.3,
- said nematic LC being at least 80% in weight of said mixture
- salt ions with ions concentration being from 0.02% to 0.5%, preferably 0.05%or 0,1% to 0.3%, in weight of said mixture.

16. Liquid crystal mixture suitable for electroactive material of electroactive layer as claimed in preceding claims of mixture wherein Δε is from -7 to -4.

17. Liquid crystal mixture as claimed in any of preceding claims of mixture wherein said salt ions are chosen from zwitterions and salts of the formula (I)
A⁺(R)ₙ X⁻ (I)
wherein
A is chosen from N, P and S, in particular A is N;
when A is S, n is 3;
when A is N or P, n is 4R are identical or different and selected from a hydrogen atom or branched or linear hydrocarbon chains, optionally comprising heteroatoms, notably devoid of oxygen, in particular R are aliphatic chains devoid of heteroatoms and comprising at least 3 carbon atoms, preferably R are identical C₃-C₁₈ alkyl chains;
X- is chosen from an entity comprising at least one halogen atom, HSO₄⁻, H₂PO₄⁻, NO₃⁻, NO₂⁻, HCO₃⁻ in particular X⁻ is chosen from HSO₄⁻ or an entity comprising at least one halogen atom, excluding PF₆⁻, preferably X⁻ is chosen from F-, Cl⁻, Br, I⁻ and BF₄⁻, even more preferably, X⁻ is BF₄⁻.

18. Liquid crystal mixture suitable as claimed in preceding claims of mixture wherein said salt ions are chosen from ammonium salts of formula (II)
N⁺(R)₄ X⁻ (II)
wherein X is as defined in preceding claim,
and N⁺(R)₄ is chosen from tetrapropylammonium, tetrabutylammonium, tetrapentylammonium, tetrahexylammonium, tetraheptylammonium, tetraoctylammonium, didodecyldimethylammonium, hexadecyltrimethylammonium, trimethyloctadecylammonium, cetyltrimethylammonium, tributylmethylammonium, tributyl(hexadecyl)ammonium, tributyl(tetradecyl)ammonium, trihexyltetradecylammonium and myristyltrimethylammonium, in particular, said salt ions are chosen from tetrabutylammonium tetrafluoroborate (TBATFB), tetrabutylammonium chloride (TBACL), tetrabutylammonium bromide (TBAB), tetrabutylammonium iodine (TBAI), tetrabutylammonium hydrogen sulfate (TBASO),preferably, said salt ion are chosen from TBATFB, TBACL, TBAB and TBAI, and even more preferably, said salt ion is TBATFB.
